# FASCICULE DE BREVET EUROPEEN

(11) **EP 0 873 897 B1**
(45) Date de publication et mention de la délivrance du brevet: **03.07.2002**
(21) Numéro de dépôt: 98400776.5
(22) Date de dépôt: 02.04.1998
(51) Int. Cl.: B60J 10/00

(54) **Profilé tubulaire à effet insonorisant amélioré et joint comportant un tel profilé, pour encadrement d'ouvrant d'un véhicule automobile**
Schalldämmendes Rohrprofil und durch ein solches Profil gebildete Dichtung, für das Einfassen einer Kraftfahrzeugöffnung
Sound damping tubular profile and seal comprising such profile,for framing an opening in a vehicle

(30) Priorité: 21.04.1997 FR 9704885
(43) Date de publication de la demande: 28.10.1998
(73) Titulaire: Société Anonyme dite: MESNEL, 92000 Nanterre (FR)
(72) Inventeur: Dron, Bernard, 92800 Puteaux (FR)
(74) Mandataire: Jolly, Jean-Pierre

(56) Documents cités:
- EP-A- 0 613 800
- GB-A- 714 554
- GB-A- 2 240 856
- US-A- 4 410 012

## Description

La présente invention concerne un profilé tubulaire en un matériau élastomère ou thermoplastique, à effet insonorisant amélioré. L'invention concerne également un joint comportant un tel profilé pour encadrement d'un ouvrant (porte, coffre, capot) d'un véhicule automobile .

On sait que de tels joints comprennent habituellement, d'une part, une partie formant pince à section en U, destinée à coiffer et pincer par exemple un bord saillant d'un encadrement de porte, une ou des lèvres faisant saillie à partir des branches du U disposées en regard, en vue de verrouiller cette partie en position sur le bord saillant, et d'autre part, au moins un élément tubulaire attenant à la partie formant pince et destiné à être écrasé par compression entre l'encadrement de porte et celle-ci, en position de fermeture de la porte, pour assurer à ce niveau l'étanchéité et l'insonorisation du véhicule. On retrouve des composants analogues dans des joints pour encadrement de coffre, de capot de véhicules automobiles ou de vitre ouvrante (non coulissante).

La partie formant pince est généralement en une matière thermoplastique du type du polychlorure de vinyle ou en un élastomère et elle comporte habituellement une armature métallique, tandis que l'élément tubulaire est en un matériau relativement mou, par exemple en caoutchouc cellulaire. Ces deux constituants du joint peuvent être réalisés et assemblés simultanément par une opération de coextrusion des deux matériaux. Ils peuvent aussi être réalisés séparément et être assemblés par collage.

L'effet d'insonorisation de tels joints laisse toutefois à désirer et l'on cherche depuis longtemps à améliorer leurs propriétés acoustiques, sans compliquer les opérations de fermeture des ouvrants.

C'est ainsi que EP-A-0 613 800 décrit un joint d'étanchéité comprenant un matériau compressible et caractérisé en ce qu'il comprend un écran acoustique formé d'un matériau additionnel ayant une impédance acoustique supérieure à celle du matériau compressible, cet écran étant disposé de façon telle, par rapport au matériau, compressible, qu'il atténue la transmission des ondes sonores. Le matériau compressible peut se présenter sous la forme d'un tube et le matériau additionnel peut être rapporté à l'extérieur ou à l'intérieur du tube, ou encore constituer une partie au moins d'une cloison transversale de ce tube. Il est également indiqué, dans la description, que le matériau compressible peut avoir la forme d'une lèvre, l'écran acoustique étant alors disposé sur cette lèvre.

La présente invention vise à proposer un profilé tubulaire en un matériau élastomère ou thermoplastique à propriétés insonorisantes améliorées, qui ne comporte pas de matériau additionnel formant un écran acoustique et qui soit par conséquent plus facile à fabriquer et moins coûteux que ceux de la technique antérieure.

A cet effet, l'invention a pour objet un profilé tubulaire en un matériau élastomère ou thermoplastique, à effet insonorisant amélioré (Profilé du type divulgué par EP-A-0 613 800), caractérisé en ce que la surface interne du profile comporte une pluralité de cannelures parallèles destinées à réfléchir les ondes sonores ayant traversé la paroi du profilé et à les atténuer par des réflexions multiples.

Ces cannelures seront de préférence réparties sur toute la surface interne du profilé, mais cette répartition n'est pas nécessairement régulière et les diverses cannelures peuvent avoir des formes et des dimensions différentes, en fonction du résultat recherché et en vue de favoriser la nécessaire compression du profilé tubulaire entre un encadrement et un ouvrant, en position de fermeture de ce dernier.

De préférence, les cannelures auront une forme telle et seront disposées de façon telle que la partie en creux d'au moins certaines d'entre elles ait tendance à se refermer, par rapprochement de ses parois latérales, lorsque le profilé est comprimé entre un ouvrant et un dormant, en présentant ainsi aux ondes sonores une épaisseur accrue à traverser, ce qui a pour effet d'améliorer encore l'insonorisation du véhicule.

Il est clair que le profilé tubulaire conforme à l'invention peut être fabriqué de façon simple par extrusion, ou par coextrusion avec une partie formant pince, en utilisant une filière appropriée.

Un joint pour encadrement d'ouvrant d'un véhicule automobile du type rappelé ci-dessus, équipé d'un profilé tubulaire conforme à l'invention, constitue un autre objet de cette invention.

Une forme de réalisation d'un tel joint, destinée à équiper un encadrement de porte d'automobile, va être décrite ci-après, à titre d'exemple non limitatif, en référence aux dessins schématiques annexés. Sur ces dessins :
La figure 1 est une vue en coupe transversale du joint, en position d'utilisation sur une feuillure de l'encadrement de porte qu'il équipe, avec la porte en position ouverte ;
La figure 2 est une vue analogue à la figure 1, avec la porte représentée en position fermée et sollicitant le profilé tubulaire.

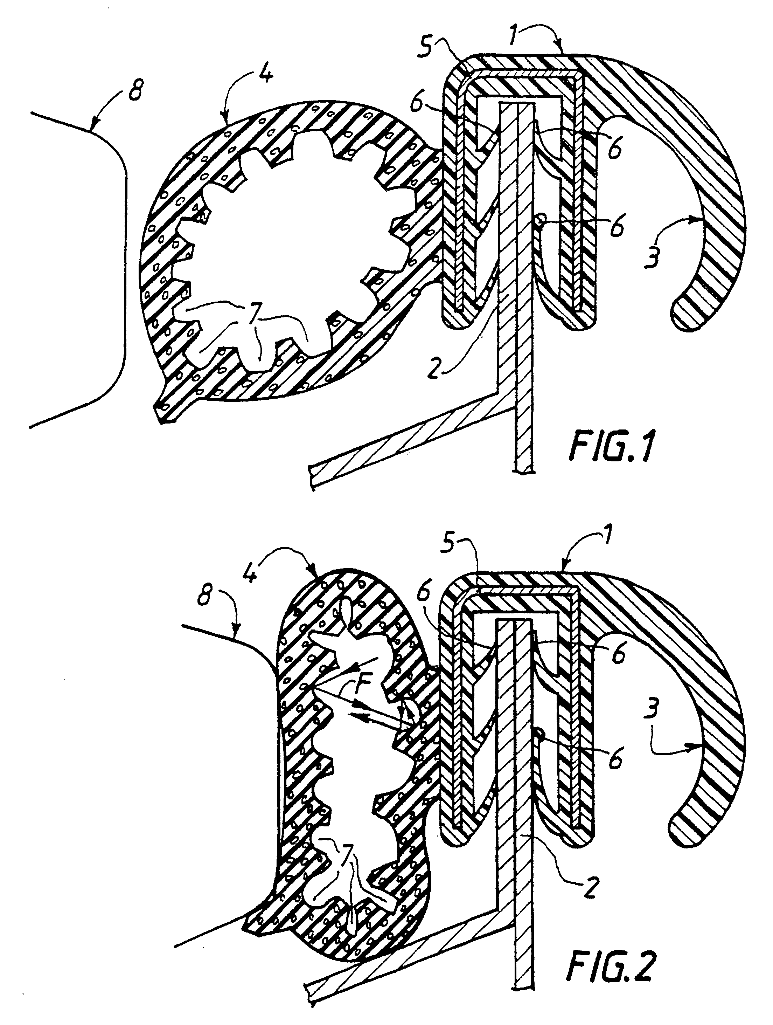

Dans cette réalisation, le joint comprend, de façon connue, une partie 1 formant pince, à section en U, destinée à coiffer et à pincer un bord métallique saillant 2 d'un encadrement de porte, une lèvre cosmétique 3, attenante à la base du U et faisant saillie à l'intérieur du véhicule, et un profilé tubulaire 4, attenant à la face extérieure d'une branche du U opposée à la lèvre 3. Le profilé 4 fait saillie vers l'extérieur du véhicule, en vue d'être comprimé entre l'encadrement de porte et la porte 8, lorsque celle-ci est refermée (voir figure 2).

La pince 1 à section en U est ici en un caoutchouc du type E.P.D.M., dans lequel est noyée une armature métallique ajourée 5, dont de nombreux types ont été décrits dans la littérature. Des lèvres 6, en un matériau analogue à celui constituant la pince 1 ou en un matériau différent, plus dur ou plus mou suivant les effets recherchés, font saillie à partir des faces disposées en regard de la pince 1 et sont inclinées vers la base du U, afin de faciliter le montage et d'assurer l'accrochage de la pince sur la feuillure 2.

La lèvre cosmétique 3 peut être en le même matériau que la pince 1 ou en un matériau élastomère ou thermoplastique différent, cellulaire ou non.

Le profilé tubulaire 4 est en un élastomère ou en un matériau thermoplastique suffisamment mou pour pouvoir être écrasé facilement par la porte 8 du véhicule, cellulaire ou non. Dans la forme de réalisation représentée sur les dessins, il est en caoutchouc cellulaire.

Conformément à l'invention, des cannelures parallèles 7 sont ménagées sur la surface interne du profilé tubulaire 4, de manière à permettre des réflexions successives multiples des ondes sonores ayant traversé la paroi du profilé et leur amortissement, comme indiqué par les flèches F de la figure 2.

Comme indiqué ci-dessus, les cannelures parallèles 7 peuvent être réparties d'une façon quelconque sur la surface interne du tube 4, régulièrement ou non, et elles peuvent avoir des formes et des dimensions différentes, judicieusement choisies pour ne pas gêner et même favoriser la fermeture de la porte 8.

Comme représenté sur la figure 2, en position de fermeture de cette porte, les faces latérales des parties en creux de certaines cannelures ont tendance à se rapprocher les unes des autres en refermant ces cannelures et en opposant ainsi aux ondes sonores une épaisseur accrue à traverser, ce qui a pour effet d'améliorer encore l'insonorisation du véhicule, sans augmenter les efforts nécessaires à la fermeture de la porte.

Des essais acoustiques comparatifs ont été effectués par la Demanderesse avec deux profilés tubulaires 4 en caoutchouc cellulaire de type E.P.D.M., de densité 0,70, ayant une épaisseur de paroi de 1,8 mm et une section ovale, dont la plus grande dimension transversale est égale à 28 mm et la plus petite dimension transversale égale à 18 mm. L'un de ces tubes présente une surface interne unie et l'autre une surface interne comportant, conformément à l'invention, des cannelures réparties suivant toute la section, ces cannelures ayant la forme représentée sur les dessins.

On a utilisé pour ces essais, effectués sur les tubes non déformés, une source sonore dont l'intensité est de 90 décibels, les mesures étant effectuées par tiers d'octave de 400 hertz à 10 kilohertz.

Les essais effectués ont montré que le profilé tubulaire conforme à l'invention apporte une réduction d'au moins 3 décibels des ondes sonores transmises, par rapport au profilé usuel.

Ces essais prouvent donc les excellentes qualités d'insonorisation du profilé tubulaire conforme à l'invention.

## Revendications

1. Profilé tubulaire (4) en un matériau élastomère ou thermoplastique, à effet insonorisant amélioré, **caractérisé en ce que** la surface interne du profilé comporte une pluralité de cannelures parallèles (7) destinées à réfléchir les ondes sonores ayant traversé la paroi du profilé et à les atténuer par des réflexions multiples.

2. Profilé selon la revendication 1, **caractérisé en ce que** les cannelures (7) sont réparties suivant toute la surface interne du profilé d'une façon telle que les faces latérales des parties en creux de certaines de ces cannelures ont tendance à se rapprocher les unes des autres pour obturer au moins partiellement ces parties, lorsque le profilé est comprimé entre un ouvrant et un dormant.

3. Joint pour encadrement d'un ouvrant de véhicule automobile, du type comprenant une partie formant pince (1), apte à coiffer et à pincer un bord saillant de l'encadrement et un profilé tubulaire (4), attenant à la partie formant pince, ce joint étant **caractérisé en ce que** le profilé tubulaire (4) est conforme à l'une des revendications 1 et 2.

## Patentansprüche

1. Rohr- bzw. schlauchförmiges Profilteil (4) aus einem Elastomer- oder thermoplastischen Material, mit verbesserter Schalldämpfungs- bzw. Schallisolationswirkung,
**dadurch gekennzeichnet, daß** die Innenoberfläche des Profils eine Mehrzahl paralleler Nuten (7) aufweist, mit der Bestimmung, die Schallwellen, welche die Wandung des Profils durchsetzt haben, zu reflektieren und durch mehrfache Reflexionen zu dämpfen.

2. Profilteil nach Anspruch 1, **dadurch gekennzeichnet, daß** die Nuten (7) über die gesamte Innenoberfläche des Profils in solcher Weise verteilt sind, daß die Seitenflächen der Hohlteile bestimmter dieser Nuten bestrebt sind, sich einander anzunähern und so diese Hohlteile wenigstens teilweise zu verschließen, wenn das Profil zwischen einem Flügel- und einem Rahmenteil zusammengepreßt wird.

3. Dichtung für den Rahmen einer Kraftfahrzeugöffnung, vom Typ mit einem eine Klemme (1) zum Überdecken und Einklemmen eines vorstehenden Rands des Rahmens bildenden Teil und mit eienm an das Klemmteil anschließenden rohr- bzw. schlauchförmigen Profilteil (4), wobei diese Dichtung **dadurch gekennzeichnet ist, daß** das rohr- bzw. schlauchförmige Profilteil (4) gemäß einem der Ansprüche 1 und 2 ausgebildet ist.

## Claims

1. A tubular profile (4) of an elastomeric or thermoplastic material, with an improved sound-proofing action, **characterised in that** the inner surface of the profile comprises a plurality of parallel channels (7) designed to reflect sound waves which have passed through the wall of the profile and to attenuate them by multiple reflections.

2. A profile according to claim 1, **characterised in that** the channels (7) are distributed over the entire inner surface of the profile in such a way that the lateral faces of the recessed portions of certain of said channels have a tendency to move closer together to close said portions at least partially, when the profile is compressed between a frame and an opening member.

3. A seal for the frame of an opening member of a motor vehicle, of the type comprising a portion forming a clip (1), capable of covering and gripping a projecting edge of the frame, and a tubular profile (4) adjoining the portion forming the clip, said seal being **characterised in that** the tubular profile (4) is in accordance with one of claims 1 to 2.
